(19) **Europäisches Patentamt / European Patent Office / Office européen des brevets**

(11) **EP 2 547 890 B1**

(12) **EUROPEAN PATENT SPECIFICATION**

(45) Date of publication and mention
of the grant of the patent:
**10.05.2017 Bulletin 2017/19**

(21) Application number: **11712098.0**

(22) Date of filing: **17.03.2011**

(51) Int Cl.:
*F02D 41/14* $^{(2006.01)}$    *F02D 41/30* $^{(2006.01)}$
*G01M 15/11* $^{(2006.01)}$

(86) International application number:
**PCT/US2011/028831**

(87) International publication number:
**WO 2011/116200 (22.09.2011 Gazette 2011/38)**

(54) **PREDICTION AND ESTIMATION OF THE STATES RELATED TO MISFIRE IN AN HCCI ENGINE**

VORHERSAGE UND SCHÄTZUNG VON ZUSTÄNDEN IM ZUSAMMENHANG MIT FEHLZÜNDUNGEN BEI EINEM HCCI-MOTOR

PRÉDICTION ET ESTIMATION DES ÉTATS ASSOCIÉS À UN RATÉ D'ALLUMAGE DANS UN MOTEUR À ACCH

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.03.2010 US 661587**

(43) Date of publication of application:
**23.01.2013 Bulletin 2013/04**

(73) Proprietor: **Robert Bosch GmbH
70469 Stuttgart (DE)**

(72) Inventors:
• **CHATURVEDI, Nalin
Sunnyvale
CA 94086 (US)**
• **MAYHEW, Christopher
Union City
CA 94587 (US)**
• **PARK, Sungbae
NL-6851JX Huissen (NL)**
• **AHMED, Jasim
Mountain View
CA 94041 (US)**
• **KOJIC, Aleksandar
Sunnyvale
CA 94086 (US)**
• **SONG, Han, Ho
Seoul 151-742 (KR)**

• **COOK, David
Mountain View
CA 94043 (US)**
• **KNIERIM, Karl, Lukas
70197 Stuttgart (DE)**

(74) Representative: **DREISS Patentanwälte PartG mbB
Friedrichstrasse 6
70174 Stuttgart (DE)**

(56) References cited:
**DE-A1- 19 536 098        US-A- 6 006 157
US-A1- 2002 026 921**

• **KNIERIM K L ET AL: "Simulation of misfire and strategies for misfire recovery of gasoline HCCI", AMERICAN CONTROL CONFERENCE, 2008, IEEE, PISCATAWAY, NJ, USA, 11 June 2008 (2008-06-11), pages 3947-3952, XP031296673, ISBN: 978-1-4244-2078-0**
• **SHAVER G M ET AL: "Modeling cycle-to-cycle dynamics and mode transition in HCCI engines with variable valve actuation", CONTROL ENGINEERING PRACTICE, PERGAMON PRESS, OXFORD, GB, vol. 14, no. 3, 1 March 2006 (2006-03-01), pages 213-222, XP025044097, ISSN: 0967-0661, DOI: DOI:10.1016/J.CONENGPRAC.2005.04.009 [retrieved on 2006-03-01]**

EP 2 547 890 B1

**Description**

## BACKGROUND OF THE INVENTION

### FIELD OF THE INVENTION

The present invention relates to a method of predicting a misfire before it occurs during operation of an HCCI engine so that preventive and/or remedial action may be taken.

### DESCRIPTION OF RELATED ART

Homogeneous charge compression ignition or HCCI is a combustion method that has been proposed for internal combustion engines. It is attractive in automotive applications, since HCCI can yield high efficiencies at partial loads (up to 30%) compared to a conventional spark ignited combustion. Furthermore, engines that run on HCCI also yield significantly reduced $NO_x$ emissions due to their low operating temperatures on an average. Some of these results have been reported. Essentially, HCCI involves a homogenized charge, which auto ignites due to compression within the combustion stroke. Thus, it combines the advantage of diesel-like combustion by including high compression ratios, while maintaining the low emissions observed in Gasoline engines due to the homogeneous charge. Historically, it was first encountered as a combustion mode in two-stroke engines and was later used in a four stroke engine. For an overview of research in HCCI and its potential, *see* K. Epping, S. Aceves, R. Bechtold and J. Dec, "The Potential of HCCI Combustion for High Efficiency and Low Emissions," SAE paper 2002-01-1923, 2002*.*

There are a couple of methods to induce an HCCI mode of combustion in the IC (internal combustion) engine. These include but are not limited to, heating of the intake manifold or pre-heating of induction gases, and retaining or re-inducting exhaust gases using either external exhaust gas recirculation (EGR) and/or internal EGR. Internal EGR can be realized through either rebreathing strategies, which involve reopening the exhaust valve after the top dead center of gas exchange, or by an early closing of the exhaust valve, called negative valve overlap, to trap residual hot gas within the cylinder.

Till recently, research in HCCI has mostly paid attention to steady-state operation with little attention to challenges involved with HCCI operation close to unstable regimes. Thus the dynamics of HCCI, within its nominal operating region, are well understood and control of HCCI at these points has been realized by various strategies (*see* R. Karrelmeyer, J. Having, W. Fischer, and J. P. Hathout: "Closed-loop control of a 1- cylinder gasoline HCCI-Engine in Dynamic Operation, " E-COSM - Rencontres Scientifiques de l'IFP, 2006*;* G. M. Shaver: "Physically-Based Modeling and Control of Residual-Affected HCCI Engines using variable Valve Actuation, "PhD thesis, Stanford University, 2005*; and* J. Bengtsson, P. Strandh, R. Johansson, P. Tunestal and B. Johansson: "Model Predictive Control of Homogeneous Charge Compression Ignition (HCCI) Engine Dynamics", IEEE International Conference on Control Applications, pages 1675-1680, 2006*).* While HCCI operation close to the borders of this stable operating region is both beneficial and necessary for practical implementation of HCCI, the control problems in this region remain a challenge since there does not even exist a reduced-order model for control purposes that describes behavior close to misfire region.

Though a wide range of models exist in the literature based on the application domain, most of the current control oriented zero dimensional models do not explicitly model the chemical kinetics of the combustion process and do not have a model for misfire when a disturbance is introduced in the steady-state operation. Most current control strategies for HCCI (*see, e.g.,* R. Karrelmeyer, J. Haring, W. Fischer, and J. P. Hathout: "Closed-loop control of a 1-cylinder gasoline HCCI-Engine in Dynamic Operation", E-COSM - Rencontres Scientifiques de l'IFP, 2006*;* G. M. Shaver: "Physically-Based Modeling and Control of Residual-Affected HCCI Engines using variable Valve Actuation, " PhD thesis, Stanford University, 2005*; and* J. Bengtsson, P. Strandh, R. Johansson, P. Tunestal and B. Johansson: "Model Predictive Control of Homogeneous Charge Compression Ignition (HCCI) Engine Dynamics, " IEEE International Conference on Control Applications, pages 1675-1680, 2006*)* focus on the control of the engine dynamics in the stable region away from the borders of instability. In this case, the engine is transitioned from a delayed combustion operation to a nominal combustion operation by feedback control. This process often involves a decrease of the EGR or a delay in the injection timing to prevent the advanced combustion within the next cycle. However, applying the same strategy in case of misfire is detrimental to bringing the engine back to stable combustion.

Knierim K.L. et al., "Simulation of misfire and strategies for misfire of gasoline HCCI", American Control Conference, 2008, IEEE, Piscataway, NJ, USA, 11 June 2008, pages 3947-3952, XP031296673, ISBN: 978-1-4244-2078-0 discloses a method for predicting and correcting an impending misfire in a homogeneous charge compression ignition (HCCI) engine. US 2002-026921 A1 also relates to a method for predicting and correcting an impending misfire in a homogeneous charge compression ignition (HCCI) engine.

**BRIEF SUMMARY OF THE INVENTION**

In accordance with the present invention, a new method is presented that captures the behavior of HCCI in case of disturbance-introduced misfire. This method involves a control oriented zero dimensional model that is able to capture both steady state behavior and misfire behavior of the engine.

Prediction of misfire and its avoidance is critical to safe and reliable operation of HCCI engines at low load. HCCI operation at low loads is beneficial, but difficult due to the presence of combustion instabilities. These instabilities cause the engine to misfire, thus stalling its operation. Prediction of misfire is the first step to avoiding it. In this invention, a strategy is presented that allows one to extrapolate information based on the initial state of an engine and allows one to predict if misfire will occur. If a misfire is predicted, one can take appropriate remedial measures to avoid it or compensate for it.

As noted above, most current control strategies for HCCI focus on the control of the engine dynamics in the stable region away from the borders of instability, in which case the engine is transitioned from a delayed combustion operation to a nominal combustion operation by feedback control, and this process often involves a decrease of the EGR or a delay in the injection timing to prevent the advanced combustion within the next cycle. However, applying the same strategy in case of misfire is detrimental to bringing the engine back to stable combustion, i.e., in case of misfire, instead of decreasing the amount of EGR, it is necessary to increase the amount of EGR to keep more thermal energy inside of the cylinder.

The method of the present application uses a *modified* Arrhenius integral threshold, a novel recursive mass flow equation to capture the effect of feedback from cycle-to-cycle and couple it with a thermodynamics model to capture the effect of partly burned fuel and misfires. Also presented is a model to predict the amount of fuel that is used if a misfire occurs. For illustration purposes, the strategy/method in the present application is compared to a high-fidelity model for misfire, presented in K. L. Knierim, Sungbae Park, J. Ahmed, A. Kojic, I. Orlandini and A. Kulzer: "Simulation of misfire and strategies for misfire recovery of gasoline HCCI," Proceedings of the 2008 American Control Conference, pages 3947-3952, 2008. In *"Simulation of misfire and strategies for misfire recovery of gasoline HCCI,"* a model was presented which used a simplified chemical mechanism for the oxidation of iso-octane and n-heptane coupled with an airflow model, and the chemical kinetics were modeled using a detailed simulation software that was able to capture the effect of partly burned fuel or misfires.

**BRIEF SUMMARY OF THE SEVERAL VIEWS OF THE DRAWING**

Figure 1 is a diagram showing various processes that take place in a cycle of an engine.

Figure 2 is a plot of an integrated Arrhenius reaction kinetic mechanism (IAR) versus the crank angle of an engine.

Figure 3 is a plot of a fraction of fuel burned in a cylinder versus the integrated Arrhenius reaction kinetic mechanism for various data points.

Figure 4 is a plot of an integrated Arrhenius reaction kinetic mechanism versus an engine crank angle, which shows combustion and non-combustion in a trapping phase.

Figure 5 shows plots of cylinder temperature and pressure predicted by the model of the present Application and a CHEMKIN/Airflow model.

**DETAILED DESCRIPTION OF THE INVENTION**

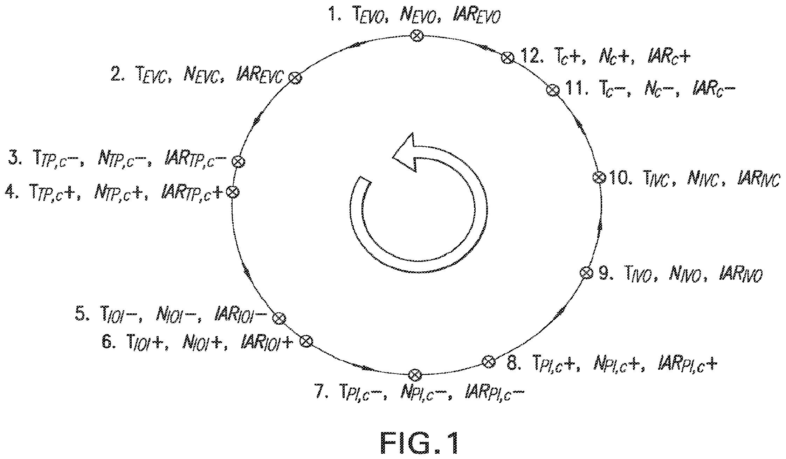

An engine cycle is shown in Figure 1. The cycles in an engine repeat continuously in the direction shown in the figure. To predict misfire, certain states are tracked throughout the cycle and in particular, their values marked at each of the twelve points as shown in Figure 1. These twelve points are:

1. Exhaust valve opening (EVO): This event corresponds to the crank angle at which the exhaust valve opens.

2. Exhaust valve closing (EVC): This event corresponds to the crank angle at which the exhaust valve closes.

3. Trapping phase, before combustion (TP,c$^-$): This event corresponds to the instant just before 50% heat release (CA50) if there is combustion in the trapping phase. Otherwise, this event corresponds to the point just before the instant of injection in step 5. For a nominal engine cycle, there is no combustion in this phase and steps 3, 4 and 5 are identical.

4. Trapping phase, after combustion (TP,c$^+$): This event corresponds to the instant just after CA50 or 50% heat release point, if there is combustion in the trapping phase. Otherwise, this event corresponds to the point just before the instant of injection in step 5. For a nominal engine cycle, there is no combustion in this phase and steps 3, 4 and 5 are identical.

5. Before instant of injection (IOI$^-$): This event corresponds to the crank angle just before injection.

6. After instant of injection (IOI$^+$): This event corresponds to the crank angle just after injection.

7. Post-injection/Pre-intake, before combustion (PI,c$^-$): This event corresponds to the instant just before 50% heat release (CA50) if there is a combustion event in the post-injection and pre-intake phase. Otherwise, this event corresponds to the intake valve opening in step 9. For a nominal engine cycle, there is no combustion in this phase and steps 7, 8 and 9 are identical.

8. Post-injection/Pre-intake, after combustion (PI,c$^+$): This event corresponds to the instant just after CA50 or 50% heat release point, if there is a combustion event in the post-injection and pre-intake phase. Otherwise, this event corresponds to the intake valve opening in step 9. For a nominal engine cycle, there is no combustion in this phase and steps 7, 8 and 9 are identical.

9. Intake valve opening (IVO): This event corresponds to the crank angle at which the intake valve opens.

10. Intake valve closing (IVC): This event corresponds to the crank angle at which the intake valve closes.

11. Before combustion (c$^-$): In case of complete combustion, this event corresponds to the instant just before 50% heat release (CA50). In case of misfire, this corresponds to the crank angle at EVO in step 1.

12. After combustion (c$^+$): In case of complete combustion, this event corresponds to the instant just after CA50 or 50% heat release point. In case of misfire, this step corresponds to the crank angle at EVO in step 1.

Note that steps {3, 4} and {7, 8} do not occur for a nominal engine operation and are identical to the subsequent steps.

Of the various states that are tracked, the two most important states are temperature $T$ and the *mole vector* N $\in R^5_{\geq 0}$ that denotes the vector of moles of the relevant chemical species present in the combustion chamber. Components of $N$ are referred to as $N^i$, where i $\in \{C_aH_b, O_2, N_2, CO_2, H_2O\}$. For instance, $N^{N2}$ denotes the moles of $N_2$ in the cylinder. Another important state that is tracked is the integrated arrhenius rate (IAR), which shall be defined later.

To start the computation in an engine control unit (ECU), one can ideally begin from any point in the circle. However, for the purposes of this discussion, we consider step 1 as the starting point.

## Mass Balance

In the context of engine misfire, an explicit mass balance becomes crucial for tracking the quantities of major species present in the cylinder. Implicit mass balance assumptions, like those made in G. M. Shaver, M. Roelle and J. C. Gerdes: "A two-input two-output control model of HCCI engines," American Control Conference, Proceedings of the 2006, 2006, are no longer valid when a combustion produces a partial burn of fuel.

In the following mass balance, the engine is considered to be a batch process reactor with product recycling from cycle-to-cycle as follows.

1. $N_c(k-1)$ denotes the mole vector after combustion on the previous cycle.

2. Some product is exhausted. The remaining, recycled, moles are denoted *by $N_r(k)$.*

3. The recycled product is mixed with additional fuel from injection and air from intake. This input is denoted as *u(k)* and $N_m(k)$ denotes the mixed pre-combustion mole vector.

4. Combustion occurs according to the reaction stoichiometry (1). Partial burn is captured by the disturbance $\in_c(k)$

$\in [0,1]$, where $\epsilon_c(k) = 0$ indicates a complete combustion of fuel. The parameter $\varphi(k) \in [0,1]$ is the ratio of fuel moles to the stoichiometric value. $N_c(k)$ denotes the post-combustion mole vector.

$$\phi C_a H_b + (a + b/4)O_2 \longrightarrow \phi\epsilon_c C_a H_b + (a + b/4)(1 - \phi(1 - \epsilon_c))O_2$$
$$+ a\phi(1 - \epsilon_c)CO_2 + (b/2)\phi(1 - \epsilon_c)H_2O \qquad (1)$$

The mass balance is as follows:

$$N_r(k) = \beta(k)N_c(k - 1) \qquad (2)$$

$$N_m(k) = N_r(k) + u(k) \qquad (3)$$

$$N_c(k) = P(\epsilon_c(k))N_m(k), \qquad (4)$$

where $\beta(k)$ is the fraction of recycled products and $u(k)=\tilde{N}_{int}(k)+\tilde{N}_{inj}(k)$ is the input mole vector. $\tilde{N}_{int}(k)=\tilde{n}_{int}(k)$ [0 $\mu_{O2}$ $\mu_{N2}$ 0 0]$^T$ =$\tilde{n}_{int}(k)=\tilde{N}_{int}$ is the intake mole vector, where $\tilde{n}_{int}$ is the total of moles of intake and $\mu_{O2}$ and $\mu_{N2}$ denote the mole fractions of oxygen and nitrogen in the atmosphere, respectively. $\tilde{N}_{inj}(k)=\tilde{n}_{inj}(k)$ [1 0 0 0]$^T$ = $\tilde{n}_{inj}(k)$ = $\tilde{N}_{inj}$ is the injection mole vector, where $\tilde{n}_{inj}$ is the total moles of injected fuel.

$$P(k) = \begin{bmatrix} \epsilon_c(k) & 0 & 0 & 0 & 0 \\ -(a + b/4)(1 - \epsilon_c(k)) & 1 & 0 & 0 & 0 \\ 0 & 0 & 1 & 0 & 0 \\ a(1 - \epsilon_c(k)) & 0 & 0 & 1 & 0 \\ \frac{b}{2}(1 - \epsilon_c(k)) & 0 & 0 & 0 & 1 \end{bmatrix} \qquad (5)$$

is the reaction matrix obtained directly from (1).

Additionally, $P_0 = P|_{\epsilon c} = 0$ is defined as the nominal reaction matrix, corresponding to a full fuel burn, so that $P(k) = (1 - \epsilon_c(k))P_0 + \epsilon_c(k)I$. Letting $B = [\tilde{N}_{int} \; \tilde{N}_{inj}]$, the mass balance takes the simple form

$$N_c(k) = P(k)\left(\beta(k)N_c(k - 1) + N_{int}(k) + N_{inj}(k)\right)$$

$$= \beta(k)P(k)N_c(k - 1) + P(k)B \begin{bmatrix} n_{int}(k) \\ n_{inj}(k) \end{bmatrix}. \qquad (6)$$

Since the fraction of recycled products is controlled from cycle-to-cycle, $\beta(k)$ is an input and in general the model is nonlinear. However, one might view (6) as a time-invariant linear system when $\beta(k)$ and $\epsilon_c(k)$ are constant.

## Simplified Thermodynamic Model

The combustion, gas exchange, injection, and compression/expansion processes are now approximated with simplified thermodynamic mechanisms. In addition to the mole vector state N, and temperature (in Kelvin), $T$, an additional state and a pressure $p$ (Pa) are introduced. $V$ is the cylinder volume. The notation in this section follows specific events in the engine as described earlier, where state variables can change.

Given $N$ and $T$, the pressure in the cylinder is assumed to be given by the ideal gas law, $pV = 1^T NRT$, where $1^T = [1 \ldots 1]$. For some vector $x \; \varepsilon \; R^n, 1^T x = \sum_{i=1}^{n} x_i$ so that $1^T N$ is the total number of moles of (ideal) gas. Similarly, the specific heat vectors $C_p(T)$ and $C_v(T)$, the constant-pressure and constant-volume specific heat, respectively, are defined. Then, $C_p^T N / 1^T N$ denotes the constant-pressure specific heat of the in-cylinder gas mixture. Under the ideal gas assumption, $C_p - C_v = 1R$. Finally, the molar enthalpy vector is approximated with a constant specific heat as $H(T) = \Delta_f H + (T - T_{ref})C_p$, where $\Delta_f H$ is the molar enthalpy of formation vector and $T_{ref}$ is a reference temperature corresponding to the heat of formation.

The sequence of thermodynamic events in the cylinder during one nominal engine cycle as shown in Figure 1 is as follows.

1. Post-combustion (c+) to exhaust valve opening *(EVO)*: isentropic expansion.

2. EVO to exhaust valve closure *(EVC)*: Isentropic, constant pressure expansion of exhaust gases to atmospheric conditions.

3. EVC to pre-injection *(IOI-* - "instant of injection") : Isentropic compression/expansion. Typically, the injection is *after* top dead center (TDC).

4. *IOI -* to post-injection *(IOI +)*: instantaneous injection

5. *IOI+* to intake valve opening *(IVO)*: Isentropic expansion

6. *IVO* to intake valve closure IVC: Isentropic, constant pressure induction of gases.

7. *IVC* to pre-combustion (c-): Isentropic compression

8. c- to c+: constant-volume combustion with partial heat loss

The evolution of the states from process to process is now calculated. For any event E (e.g. $E$ = IVC), $V_E$ denotes the cylinder volume at that event. During injection and combustion, $V$ is assumed to remain constant and the distinction between the "pre" and "post"-event $V$ in notation will be dropped.

Finally, the state *IAR* mentioned earlier, is defined as

$$IAR(\theta) \triangleq \int_{\theta_1}^{\theta} A \exp\left(-\frac{E_a}{RT(\theta)}\right) [C_a H_b]^{\sigma_1} [O_2]^{\sigma_2} d\theta + IAR(\theta_1), \qquad (7)$$

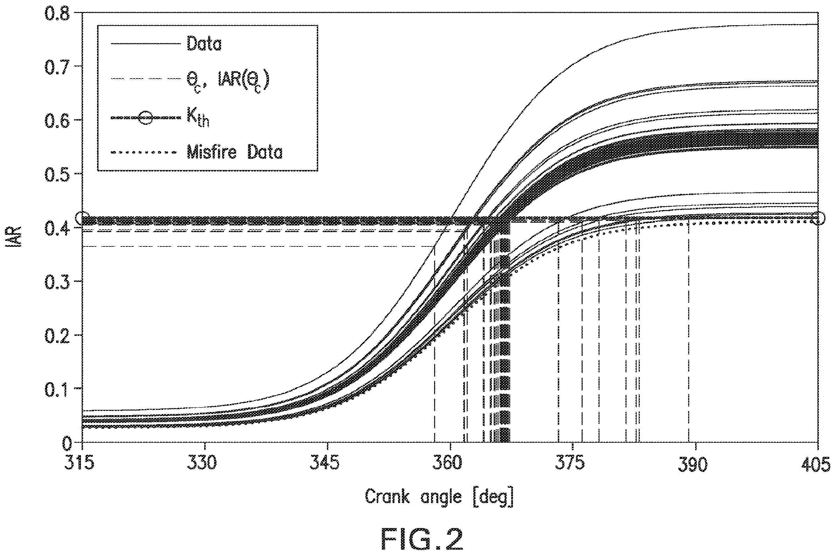

where $A$, $E_a$, $\sigma_1$, and $\sigma_2$ are parameters of the combustion reaction rate, $[S]$ is the concentration of species S given by $N^S(\theta)/V(\theta)$, and $V(\theta)$ is given by the familiar cylinder volume formula. The temperature variation $T$ is determined by polytropic relations. For example, given the temperature at *IOI+*, the temperature at any angle $\theta \in$ *[IOI+, IVO]* is calculated by $T(\theta) = (V(\theta)/V_{IOI})^{\gamma-1} T_{IOI}+$. The *IAR* yields in some sense, the rate to which the reaction has proceeded up to crank angle $\theta$. In particular, if $IAR(EVO) \geq K_{th}$, where $K_{th}$ represents a threshold, then a complete combustion occurs. On the other hand, if $IAR(EVO) < Kth$, then there is a misfire; see Figure 2. Furthermore, the combustion phasing, CA50, of the combustion process is determined by the crank angle at which $IAR = K_{th}$. The threshold can be different in the region between steps 2-5, 6-9 and 10-1.

The *IAR* parameters for a typical engine are shown in Table 1:

Table 1: Value of identified *IAR* parameters.

| | Parameter | | | | |
|---|---|---|---|---|---|
| | $K_{th}$ | A | $E_a$ | $\sigma_1$ | $\sigma_2$ |
| Value | 0.4169 | $10^7$ | $1.060 \times 10^5$ | 0.6709 | 0.2570 |

Fig. 2 provides a graphical validation of the identification, showing the values of *IAR($\theta$)* for different initial conditions, the combustion phasing angles and the projected value of *IAR($\theta$)* for various data points, the value of $K_{th}$, and a data point that resulted in a misfire. In this case, the value of *IAR* did not reach $K_{th}$.

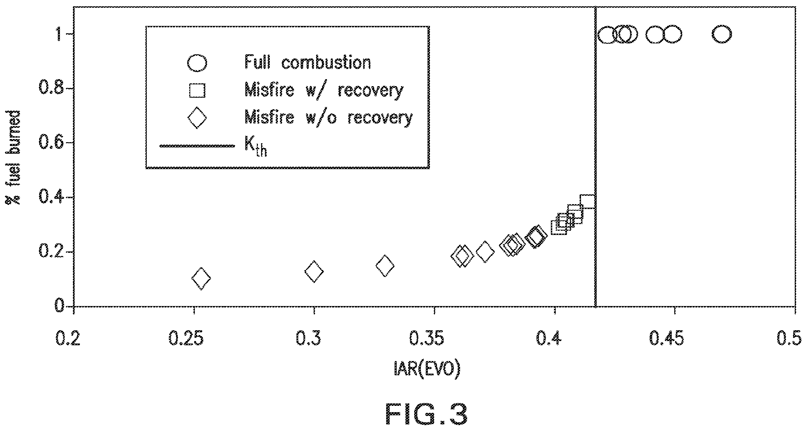

Also, the amount of fuel that is consumed in the reaction at the crank angle $\theta$ is a function of the *IAR* (see Figure 3). In this respect, the following relationship physically based upon the *IAR* function is proposed:

$$\epsilon_c(\theta) = \Phi(IAR(\theta)), \qquad (8)$$

where $\Phi(x) : R \to [0, 1]$ is continuous, non-increasing, $\Phi(x) = 0$ for all $x \geq K_{th}$, and $\Phi(x) \to 1$ as $x \to 0$. For example, when $IAR(EVO) \geq K_{th}$, $\epsilon_c = 0$; however, if a misfire occurs $(IAR(EVO) \leq K_{th})$, then $\epsilon_c \in (0, 1]$. Note that similar to the threshold, the function $\Phi$ can be different between steps 2-5, 6-9 and 10-1.

In further regard to Figure 3, this figure shows the fraction of fuel burned vs. $IAR(EVO)$. As $IAR(EVO)$ increases, more fuel is consumed, until $IAR(EVO) \geq K_{th}$. Thereafter, all the fuel is consumed. The % fuel burned (Y-axis) is equal to $1 - \epsilon_c$. The circles are data points that exhibited a normal, full combustion. The squares are data points where a misfire occurred, but combustion occurred in the trapping phase. The diamonds are data points where there was a misfire and no combustion in the trapping phase.

As mentioned before, for purpose of illustration, step 1 in Figure 1 is the starting point. Thus, suppose that $T_{c+}$, $N_{c+}$ and $IAR_c+$ from the last cycle is known. In the following subsections, the evolution of the states $T_X$, $N_X$ and $IAR_X$ as the engine runs its cycle is tracked, where $X$ denotes any of the twelve points on the cycle as shown in Figure 1.

**Step 1:** $c^+ \to EVO$

In this case,

$$T_{EVO} = (V_{EVO}/V_{c+})^{\gamma-1} \, T_{c+}, \qquad (9)$$

where $\gamma$ is the polytropic coefficient and

$$N_{EVO} = N_{c+}, \quad IAR_{EVO} = IAR_{c+}. \qquad (10)$$

**Step 2:** $EVO \to EVC$

The exhaust event is assumed to expand the gas in the cylinder to atmospheric conditions isentropically and under constant pressure. The temperature evolution is given by

$$T_{EVC} = (p_{EXH}/p_{EVO})^{\frac{\gamma-1}{\gamma}} \, T_{EVO}, \qquad (11)$$

where $p_{EXH}$ is the measured pressure of the exhaust manifold (or assumed to be atmospheric) and $p_{EVO} = \mathbf{1}^T N_{EVO} R T_{EVO}/V_{EVO}$.

Let

$$\tilde{V}_{EVC} = \frac{\mathbf{1}^T N_{EVO} R T_{EVC}}{p_{EVC}} = \frac{\mathbf{1}^T N_{EVO} R T_{EVC}}{p_{EXH}} \qquad (12)$$

denote the volume of expanded gas so that the moles of gas after exhaust is given by

$$N_{EVC} = \left(V_{EVC}/\tilde{V}_{EVC}\right) N_{EVO}. \qquad (13)$$

Finally,

$$IAR_{EVC} = IAR_{EVO}. \qquad (14)$$

**Step 3:** $EVC \to TP, c^-$

In this case, the crank angle that $TP, c^-$ corresponds to is first identified. To find this, compute

$$IAR(\theta) = \int_{EVC}^{\theta} A \exp\left(-\tfrac{E_a}{RT(\theta)}\right) [C_a H_b]^{\sigma_1} [O_2]^{\sigma_2} d\theta + IAR_{EVC}, \qquad (15)$$

where $\left[C_a H_b\right] = N_{EVC}^{C_a H_b}/V(\theta)$, $\left[O_2\right] = N_{EVC}^{O_2}/V(\theta)$, and $V(\theta)$ is given by the familiar cylinder volume formula. The temperature at any angle $\theta \in [EVC, IOI]$ is calculated by $T(\theta) = V(\theta) / V_{EVC})^{\gamma-1}T_{EVC}$. Let $K_{th,2}$ be the pre-specified threshold in this region. If $IAR(IOI) \geq K_{th,2}$, then $TP, c^- = IAR^{-1}(K_{th,2})$ or else, $TP, c^- = IOI^-$.

Once the crank angle $TP, c^-$ is identified, then

$$T_{TP,c^-} = (V_{TP,c^-}/V_{EVC})^{\gamma-1} T_{EVC}, \qquad (16)$$

$$N_{TP,c^-} = N_{EVC}, \qquad (17)$$

$$IAR_{TP,c^-} = \int_{EVC}^{TP,c^-} A \exp\left(-\tfrac{E_a}{RT(\theta)}\right) [C_a H_b]^{\sigma_1} [O_2]^{\sigma_2} d\theta + IAR_{EVC}. \qquad (18)$$

**Step 4:** $TP, c^- \rightarrow TP, c^+$

In this case, compute $\in_c = \Phi (IAR_{TP,c^-})$ as given in (8) and $P$ as given in (5) for the computed $\in c$. Then,

$$N_{TP,c^+} = PN_{TP,c^-}, \qquad (19)$$

$$IAR_{TP,c^+} = IAR_{TP,c^-}. \qquad (20)$$

To compute temperature, a constant-volume combustion is assumed, and a modified energy balance is used, where some heat generated by the combustion is lost to the engine surroundings, in terms of the "lower heating value" of our fuel. For the purposes of this discussion, it is defined as

$$LHV_{C_a H_b} = -\begin{bmatrix} 1 & 0 & 0 & 0 & 0 \end{bmatrix} (P_0 - I)^T \Delta_f H$$

Multiplied by the number of moles of fuel burned, $LHV_{C_a H_b}$, gives us the amount of heat produced by this exothermic combustion. Note that with this definition, $LHV_{C_a H_b}$, is indeed positive, since the enthalpy of the products is *lower* than the enthalpy of the reactants. Note also, that from the structure of $P_0 - I$, $LHV_{C_a H_b} = -\Delta_f H^T (P_0-I)[1*]^T$, where * is any vector with 4 components.

Letting $U_{TP,c^-}$ and $U_{TP,c^+}$ denote the internal energy of the in-cylinder gas mixtures before and after combustion, respectively, and letting $\in_Q$ denote the fraction of heat generated by combustion that is lost to the cylinder wall, the following equation is obtained:

$$U_{TP,c^-} - \epsilon_Q(1 - \epsilon_c)LHV_{C_a H_b} N_{TP,c^-}^{C_a H_b} = U_{TP,c^+}. \qquad (21)$$

Then, using the definition of enthalpy $U = H - pV$, exploiting the ideal gas law, recalling that $H(T) = \Delta_f H + (T - T_{ref})C_p$, using the fact that $N_{TP,c^+} = N_{TP,c^-}$, and noting that $(1- \in_c) (P_0 - I) = (P - I)$, equation (21) is expanded into

$$\Delta_f H^T N_{TP,c^-} + (T_{TP,c^-} - T_{ref})C_p^T N_{TP,c^-} - \mathbf{1}^T N_{TP,c^-} RT_{TP,c^-} - \epsilon_Q \Delta_f H^T (P - I) N_{TP,c^-} =$$

$$\Delta_f H^T P N_{TP,c^+} + (T_{TP,c^+} - T_{ref})C_p^T P N_{TP,c^-} - \mathbf{1}^T P N_{TP,c^-} RT_{TP,c^+}. \qquad (22)$$

Solving for $T_{TP,c^+}$, grouping terms, and noting that $C_p - 1R = C_v$, the following is obtained:

$$T_{TP,c^+} = \frac{\left[((\epsilon_Q - 1)\Delta_f H^T + T_{ref} C_p^T)(P - I) + T_{TP,c^-} C_v^T\right] N_{TP,c^-}}{C_v^T N_{TP,c^-}}, \qquad (23)$$

**Step 5:** TP, $c^+ \to IOI^-$

In this case,

$$T_{IOI^-} = (V_{IOI^-} / V_{TP,c^+})^{\gamma-1} T_{TP,c^+}, \qquad (24)$$

where $\gamma$ is the polytropic coefficient and

$$N_{IOI^-} = N_{TP,c^+}, \qquad (25)$$

and

$$IAR_{IOI^-} = \int_{TP,c^+}^{IOI^-} A \exp\left(-\frac{E_a}{RT(\theta)}\right) [C_a H_b]^{\sigma_1} [O_2]^{\sigma_2} d\theta + IAR_{TP,c^+}, \qquad (26)$$

where $[C_a H_b] = N_{TP,c^+}^{C_a H_b} / V(\theta)$, $[O_2] = N_{TP,c^+}^{O_2} / V(\theta)$, and $V(\theta)$ is given by the familiar cylinder volume formula. The temperature at any angle $\theta \in [TP,c^+, IOI^-]$ is calculated by $T(\theta) = (V(\theta) / V_{TP,c^+})^{\gamma-1} T_{TP,C^+}$.

**Step 6:** $IOI^- \to IOI^+$

The injection event is modeled as a constant-volume process, where the final temperature is calculated using standard energy balance calculations. Let $\Delta_{vap} h_{C_a H_b}$ denote the heat of vaporization of the fuel and let $T_{inj}$ denote the temperature of the injected liquid fuel.
Assuming instant vaporization of the fuel, then

$$C_v^T (N_{IOI^-} + N_{inj}) T_{IOI^+} = T_{inj} C_v^T N_{inj} + T_{IOI^-} C_v^T N_{IOI^-} - \Delta_{vap} h_{C_a H_b} n_{inj} \qquad (27)$$

Thus, the following equations are obtained:

$$T_{IOI^+} = \frac{T_{inj} C_v^T N_{inj} + T_{IOI^-} C_v^T N_{IOI^-} - \Delta_{vap} h_{C_a H_b} n_{inj}}{C_v^T (N_{IOI^-} + N_{inj})}, \qquad (28)$$

$$N_{IOI^+} = N_{IOI^-} + N_{inj}, \qquad (29)$$

$$IAR_{IOI^+} = IAR_{IOI^-}. \qquad (30)$$

**Step 7:** $IOI^+ \to PI, c^-$

In this case, the crank angle that $PI, c^-$ corresponds to is first identified. To find this, compute

$$IAR(\theta) = \int_{IOI^+}^{\theta} A \exp\left(-\frac{E_a}{RT(\theta)}\right) [C_a H_b]^{\sigma_1} [O_2]^{\sigma_2} d\theta + IAR_{IOI^+}, \qquad (31)$$

where $\left[C_a H_b\right] = N_{IOI^+}^{C_a H_b} / V(\theta)$, $\left[O_2\right] = N_{IOI^+}^{O_2} / V(\theta)$, and V($\theta$) is given by the familiar cylinder volume formula. The temperature at any angle $\theta \in [IOI^+, IVO]$ is calculated by $T(\theta) = (V(\theta)/V101+)^{\gamma-1}T_{IOI+}$. Let $K_{th,1} \geq IAR_{IOI+}$ be the pre-specified threshold in this region. If $IAR(IVO) \geq K_{th,1}$, then $TP,c^- = IAR^{-1}(K_{th,1})$ or else, $TP, c^- = IVO$.

Once the crank angle $PI, c^-$ is identified, then

$$T_{PI,c^-} = (V_{PI,c^-}/V_{IOI^+})^{\gamma-1} T_{IOI^+}, \tag{32}$$

$$N_{PI,c^-} = N_{IOI^+}, \tag{33}$$

$$IAR_{PI,c^-} = \int_{IOI^+}^{PI,c^-} A \exp\left(-\frac{E_a}{RT(\theta)}\right) [C_a H_b]^{\sigma_1} [O_2]^{\sigma_2} d\theta + IAR_{IOI^+}. \tag{34}$$

**Step 8:** $PI, c^- \rightarrow PI, c^+$

As formulated in step 4, compute $\in_c = \Phi(IAR_{PI,c^-})$ as given in (8) and $P$ as given in (5) for the computed $\in_c$. Then,

$$T_{PI,c^+} = \frac{\left[((\epsilon_Q - 1)\Delta_f H^T + T_{ref} C_p^T)(P - I) + T_{PI,c^-} C_v^T\right] N_{PI,c^-}}{C_v^T N_{PI,c^-}}, \tag{35}$$

$$N_{PI,c^+} = P N_{PI,c^-}, \tag{36}$$

$$IAR_{PI,c^+} = IAR_{PI,c^-}, \tag{37}$$

where $\in_Q$ denotes the fraction of heat generated by combustion that is lost to the cylinder wall and $\Delta_f H$ was defined in step 4.

**Step 9:** $PI, c^+ \rightarrow IVO$

In this case,

$$T_{IVO} = (V_{IVO}/V_{PI,c^+})^{\gamma-1} T_{PI,c^+}, \tag{38}$$

where $\gamma$ is the polytropic coefficient and

$$N_{IVO} = N_{IOI^+}, \tag{39}$$

and

$$IAR_{IVO} = \int_{PI,c^+}^{IVO} A \exp\left(-\frac{E_a}{RT(\theta)}\right) [C_a H_b]^{\sigma_1} [O_2]^{\sigma_2} d\theta + IAR_{PI,c^+}, \tag{40}$$

where $\left[C_a H_b\right] = N_{PI,c^+}^{C_a H_b} / V(\theta)$, $O_2 = N_{PI,c^+}^{O_2} / V(\theta)$, and V($\theta$) is given by the familiar cylinder volume formula. The temperature at any angle $\theta \in [PI,c^+, IVO]$ is calculated by $T(\theta) = (V(\theta)/V_{PI,c+})^{\gamma-1}T_{PI,c+}$.

**Step 10:** *IVO → IVC*

The intake model relies on an isentropic, constant-pressure induction of atmospheric gases. When the intake valve opens at *IVO,* the in-cylinder gas is assumed to instantly expand/contract to the conditions at the intake manifold. Then, up until *IVC* or bottom-dead-center (*BDC*), the contracted in-cylinder gas is assumed to mix with atmospheric gases that fill the void in the cylinder. Because both the post-intake temperature and the number of moles of intake are unknown, the two must be solved for jointly (unless other, simplifying assumptions are made).

First, let *X* = min*(IVC, BDC),* i.e., *X* is the event that comes first: intake valve closure, or the piston reaching bottom-dead-center. The temperature and volume of the in-cylinder gas expanded/compressed to the conditions at the intake manifold are calculated using an isentropic expansion/compression.

$$\tilde{T}_X = \left(\frac{p_{int}}{p_{IVO}}\right)^{\frac{\gamma-1}{\gamma}} T_{IVO} \qquad\qquad \tilde{V}_X = \frac{\tilde{T}_X R 1^T N_{IVO}}{p_{int}} \qquad (41)$$

Then, the mole vector at event *X* is

$$N_X = N_{IVO} + \bar{N}_{int} n_{int} = N_{IVO} + N_{int}. \qquad (42)$$

A simple energy balance yields the relationship between the moles of intake and the post-intake temperature as

$$\tilde{T}_X C_p^T N_{IVO} + T_{int} C_p^T N_{int} = T_X C_p^T (N_{IVO} + N_{int}). \qquad (43)$$

Invoking the ideal gas assumption relates $T_X$ to $N_{inj}$ by

$$T_X = \frac{p_{int} V_X}{R 1^T (N_{IVO} + N_{int})}. \qquad (44)$$

Then, substituting (44) into (43), one obtains

$$\tilde{T}_X C_p^T N_{IVO} + T_{int} C_p^T N_{int} = \frac{p_{int} V_X}{R 1^T (N_{IVO} + N_{int})} C_p^T (N_{IVO} + N_{int}). \qquad (45)$$

Factoring out $n_{int}$ and grouping terms in (45), one obtains

$$n_{int}^2 (T_{int} C_p^T \bar{N}_{int} R 1^T \bar{N}_{int}) + n_{int}(\tilde{T}_X C_p^T N_{IVO} R 1^T \bar{N}_{int}$$
$$+ T_{int} C_p^T \bar{N}_{int} R 1^T N_{IVO} - p_{int} V_X C_p^T \bar{N}_{int})$$
$$+ (\tilde{T}_X C_p^T N_{IVO} R 1^T N_{IVO} - p_{int} V_X C_p^T N_{IVO}) = 0. \quad (46)$$

Thus, to solve for $T_X$ and $n_{int}$ jointly, the quadratic equation (45) must be solved for $n_{int}$.

For this intake event to make physical sense, equation (46) must have two real roots, either with one positive and one negative, or a double-root at zero. Certainly, having two positive roots or two negative roots, one could not make sense of the solution. Letting $a n_{int}^2 + b n_{int} + c = 0$ denote (46), the following conditions must be satisfied: $b^2 - 4ac > 0$ (guaranteeing real roots) and $|b| < \sqrt{b^2 - 4ac}$. Note that these two conditions are satisfied when $a > 0$ and $c < 0$.

Examining *a,* it follows that $a = T_{int} C_p^T \bar{N}_{int} R 1^T \bar{N}_{int} > 0$. Then, for $c < 0$, the following must be satisfied:

$$c = \tilde{T}_X R C_p^T N_{IVO} 1^T N_{IVO} - p_{int} V_X C_p^T N_{IVO} < 0.$$

Factoring $C_p^T N_{IVO} > 0$ from the left hand side and recalling from (41) that $p_{int}\tilde{V}_X = \tilde{T}_X R1^T N_{IVO}$, it follows that

$$\tilde{V}_X < V_X. \tag{47}$$

That is, when the in-cylinder gas at *IV0* is expanded/compressed isentropically to the conditions at *X,* the volume of the cylinder must be large enough to hold this volume of gas. Only then can a positive amount of gas from the atmosphere fill the "void" in the cylinder.

With this calculation in hand, if *IVC* ≤ *BDC,* then this concludes the intake model, otherwise (having *X = BDC),* the intake model is completed by assuming that by *BDC,* the gases have reached an equilibrium temperature, and since the volume decreases after *BDC,* the mixed in-cylinder gas is simply pushed out of the cylinder so that

$$T_{IVC} = T_{BDC} = T_X, \quad N_{IVC} = N_{BDC}\left(\frac{V_{IVC}}{V_{BDC}}\right), \tag{48}$$

and

$$IAR_{IVC} = IAR_{IVO}. \tag{49}$$

**Step 11:** *IVC → c⁻*

In this case, the crank angle that c⁻ corresponds to is first identified by computing

$$IAR(\theta) = \int_{IVC}^{\theta} A \exp\left(-\tfrac{E_a}{RT(\theta)}\right) [C_a H_b]^{\sigma_1} [O_2]^{\sigma_2} d\theta + IAR_{IVC}, \tag{50}$$

where $[C_a H_b] = N_{IVC}^{C_a H_b}/V(\theta)$, $[O_2] = N_{IVC}^{O_2}/V(\theta)$, and $V(\theta)$ is given by the familiar cylinder volume formula. The temperature at any angle $\theta \in$ *[IVC, EVO]* is calculated by $T(\theta) = V(\theta)/V_{IVC})^{\gamma-1} T_{IVC}$. Let $K_{th}$ be the pre-specified threshold in this region. If *IAR(EVO)* ≥ $K_{th}$, then c⁻ = *IAR⁻¹($K_{th}$).* Otherwise, c⁻ = *EVO* and a *misfire* occurs.

Once the crank angle c⁻ is identified, then

$$T_{c^-} = (V_{c^-}/V_{IVC})^{\gamma-1} T_{IVC}, \tag{51}$$

$$N_{c^-} = N_{IVC}, \tag{52}$$

$$IAR_{c^-} = \int_{IVC}^{c^-} A \exp\left(-\tfrac{E_a}{RT(\theta)}\right) [C_a H_b]^{\sigma_1} [O_2]^{\sigma_2} d\theta + IAR_{IVC}. \tag{53}$$

**Step 12:** *c⁻ → c⁺*

As formulated in step 4, $\epsilon_c$ = Φ (*IAR_c⁻*) is computed as given in (8), and *P* is computed as given in (5) for the computed $\epsilon_c$. Then,

$$T_{c^+} = \frac{\left[((\epsilon_Q - 1)\Delta_f H^T + T_{ref} C_p^T)(P - I) + T_{c^-} C_v^T\right] N_{c^-}}{C_v^T N_{c^-}}, \tag{54}$$

$$N_{c^+} = P N_{c^-}, \tag{55}$$

$$IAR_{c+} \simeq IAR_{c-}, \qquad\qquad (56)$$

where $\in_Q$ denotes the fraction of heat generated by combustion that is lost to the cylinder wall and $\Delta_f H$ was defined in step 4.

## Example Simulation Results for the Method

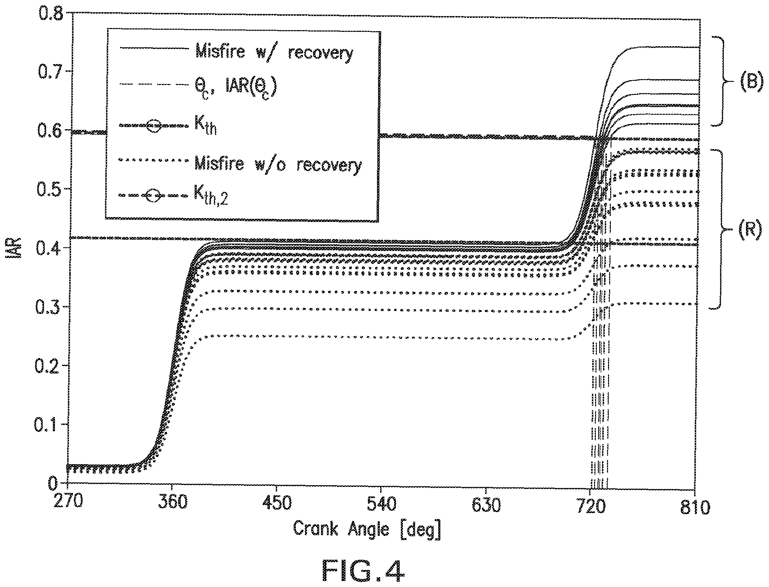

Fig. 4 shows the value *of IAR* with the parameters in Table 1 as a function of the crank angle in degrees. All curves represented on this figure are the result of a misfire in the first cycle (note that the value *of IAR($\theta$)* $< K_{th}$ during the nominal compression/expansion strokes). During the compression stroke in the trapping phase, the integrand of *IAR* takes on a highly positive value again and for some trajectories, combustion occurs in the trapping phase, where *IAR($\theta$)* $\approx K_{th,2}$ = 0.5958. Lines denoted by reference character (B) in Fig. 4 are data points where a misfire occurred, but a combustion occurred in the trapping phase (recovery); lines denoted by reference character (R) in Fig. 4 are data points where a misfire occurred without a trapping phase combustion.

As described earlier, in case of misfire, instead of decreasing the amount of EGR, it is necessary to increase the amount of EGR to keep more thermal energy inside of the cylinder. The following control inputs can improve the misfire recovery behavior. These control inputs are necessary to introduce the desirable transitions from misfire state to a nominal operating case.

- For misfire with minor heat release: A late injection to avoid full combustion during the trapping cycle, and a reduction in amount of injected fuel to account for residual fuel of the previous cycle.

- For misfire with no heat release: An earlier exhaust valve closing to trigger combustion of residual fuel within the trapping cycle, and a later injection and reduction of injected fuel to account for residual fuel of the previous cycle.

The increased EGR in the above control strategy makes combustion within the trapping cycle possible, and therefore the system recovers to a nominal operating case eventually. Depending on the initial conditions, the nominal value may be reached within the third cycle. Thus, the region of recovery for an HCCI engine from misfire can be increased. In the absence of the feedback strategy described above, the engine might stall.

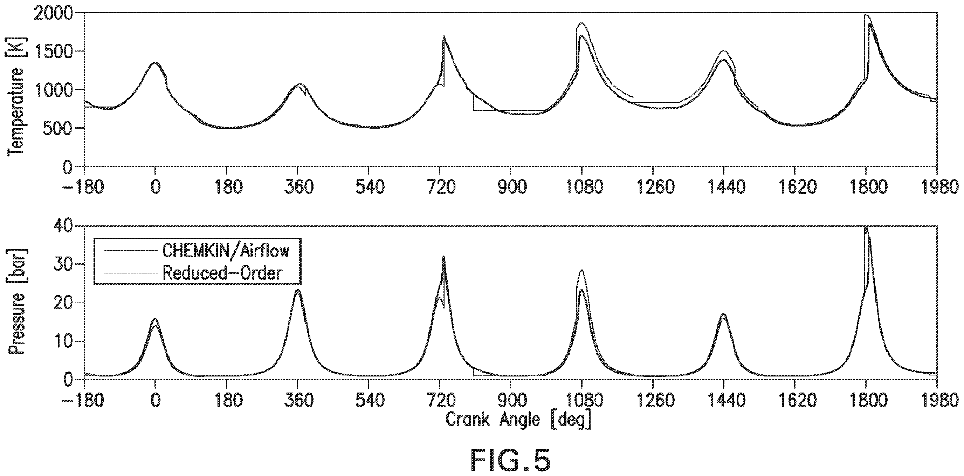

Fig. 5 shows a comparison between the high-fidelity CHEMKIN/Airflow simulation model in K. L. Knierim, Sungbae Park, J. Ahmed, A. Kojic, I. Orlandini and A. Kulzer: "Simulation of misfire and strategies form is fire recovery of gasoline HCCI, " Proceedings of the 2008 American Control Conference, pages 3947-3952, (2008*)* and the method of the present application using control inputs that caused a misfire, then a recovery. In this comparison, the reduced-order model was only given the same initial condition as the CHEMKIN/Airflow model. Only $\in_Q$, the fraction of heat lost to the engine surroundings, was tuned so that the models would match reasonably well.

## Claims

1. A method for predicting and correcting an impending misfire in a homogeneous charge compression ignition (HCCI) engine, comprising:

   modeling HCCI engine operation in a nominal, steady-state operating region and in unstable operating regions bordering the steady-state operating region, using a zero- dimensional model;
   based on the modeling of the HCCI engine operation, predicting an occurrence of an engine misfire;
   **characterized in that**
   the modeling of HCCI engine operation includes thermodynamically modeling combustion, gas exchange, injection, and compression/expansion processes of chemical species in a combustion chamber of a cylinder of the HCCI engine at selected points in a combustion cycle of the HCCI engine;
   if a value of Integrated Arrhenius Rate (IAR) at a crank angle $\theta$ corresponding to exhaust valve opening is greater than or equal to a threshold value $K_{th}$, then complete combustion is determined to have occurred in the cylinder, and if a value of IAR at a crank angle $\theta$ corresponding to exhaust valve opening is less than threshold value $K_{th}$, then a misfire is determined to have occurred in the cylinder, and
   IAR corresponds to a rate at which a reaction of the chemical species in the cylinder has proceeded up to a crank angle $\theta$; and
   wherein the method further comprises, in the case an engine misfire is predicted, providing a remedial corrective measure.

**2.** The method of claim 1, wherein the modeling of HCCI engine operation includes performing a mass balance of chemical species present in a combustion chamber of a cylinder of the HCCI engine at a plurality of points in a combustion cycle of the HCCI engine.

**3.** The method of claim 2, wherein the chemical species include $C_aH_b$, $O_2$, $N_2$, $CO_2$ and $H_2O$.

**4.** The method of claim 3, wherein the points in the combustion cycle of the HCCI engine include:

a1) exhaust valve opening;
b) exhaust valve closing;
c) trapping phase before combustion;
d) trapping phase after combustion;
e) before instant of injection;
f) after instant of injection;
g) post-injection/pre-intake, before combustion;
h) post-injection/pre-intake, after combustion;
i) intake valve opening;
j) intake valve closing;
k) before combustion; and
1) after combustion.

**5.** The method of claim 4, wherein the mass balance takes into account a partial burn of fuel during the combustion cycle.

**6.** The method of claim 4, wherein the mass balance is performed according to the following relationships:

$$\phi C_aH_b + (a + b/4)O_2 \longrightarrow \phi\epsilon_c C_aH_b + (a + b/4)(1 - \phi(1 - \epsilon_c))O_2$$

$$+ a\phi(1 - \epsilon_c)CO_2 + (b/2)\phi(1 - \epsilon_c)H_2O \tag{1}$$

$$N_r(k) = \beta(k)N_c(k - 1) \tag{2}$$

$$N_m(k) = N_r(k) + u(k) \tag{3}$$

$$N_c(k) = P(\epsilon_c(k))N_m(k), \tag{4}$$

k is a combustion cycle;
$\varphi(k) \in [0,1]$ is a ratio of fuel moles to a stoichiometric value;
$\in (k) \in [0,1]$ is a disturbance factor indicating partial burn, $\in (k) = 0$ indicating complete combustion; $N_c(k-1)$ is the mole vector after combustion in a previous cycle;
$N_r(k)$ is the mole vector indicating the remaining, recycled moles of chemical species after product is exhausted from the combustion chamber;
$\beta(k)$ is a fraction of recycled products;
u(k) is a vector indicating additional fuel from injection and air from intake;
$N_m(k)$ is the mixed, pre-combustion mole vector;
$N_c(k)$ is the post-combustion mole vector; and
P(k) is a reaction matrix obtained from relationship (1).

**7.** The method of claim 1, wherein the chemical species include $C_aH_b$, $O_2$, $N_2$, $CO_2$ and $H_2O$.

**8.** The method of claim 7, wherein the points in the combustion cycle of the HCCI engine include:

a) exhaust valve opening;
b) exhaust valve closing;

c) trapping phase before combustion;
d) trapping phase after combustion;
e) before instant of injection;
f) after instant of injection;
g) post-injection/pre-intake, before combustion;
h) post-injection/pre-intake, after combustion;
i) intake valve opening;
j) intake valve closing;
k) before combustion; and
l) after combustion.

9. The method of claim 8, wherein the thermodynamic modeling of the combustion, gas exchange, injection, and compression/expansion processes takes into account a partial burn of fuel during the combustion cycle.

10. The method of claim 8, wherein the combustion, gas exchange, injection, and compression/expansion processes of the chemical species in the combustion chamber of the cylinder of the HCCI engine are thermodynamically modeled, using the following relationships:

$$pV = 1^{T}NRT$$

$$C_p(T) - C_v(T) = 1^{T}R$$

$$H(T) = \Delta_f H + (T - T_{ref})C_p$$

$$IAR(\theta) \triangleq \int_{\theta_1}^{\theta} A \exp\left(-\frac{E_a}{RT(\theta)}\right) [C_a H_b]^{\sigma_1} [O_2]^{\sigma_2} d\theta + IAR(\theta_1), \qquad (7)$$

wherein:

p is a pressure in the cylinder;
V is a volume of the cylinder;
$1^{T}$ is a matrix corresponding to [1...1]
N is a mole vector indicating the moles of the chemical species;
R is an ideal gas constant;
T is a temperature of the chemical species in the cylinder;
$C_p$ (T) is a constant-pressure specific heat vector;
$C_v$ (T) is a constant- volume specific heat vector;
H(T) is a molar enthalpy vector;
$\Delta_f H$ is a molar enthalpy of formation vector;
$T_{ref}$ is a reference temperature corresponding to a heat of formation;
IAR ($\theta$) is an integrated Arrhenius rate corresponding to a rate at which a reaction of the chemical species in the cylinder has proceeded up to crank angle $\theta$;
A, $E_a$, $\sigma_1$ and $\sigma_2$ are parameters of a combustion reaction rate;
$[C_a H_b]$ is a concentration of species $C_a H_b$ in the cylinder; and
$[O_2]$ is a concentration of species $O_2$ in the cylinder.

11. The method of claim 10, wherein in the case a misfire is determined to have occurred in the cylinder, performing one of: (a) late injection to avoid full combustion during a trapping cycle, and a reduction in amount of injected fuel to account for residual fuel of the previous cycle; or (b) earlier exhaust valve closing to trigger combustion of residual fuel within the trapping cycle, and a later injection and reduction of injected fuel to account for residual fuel of the previous cycle.

12. The method of claim 1, wherein the remedial corrective measure includes one of: (a) late injection to avoid full combustion during a trapping cycle, and a reduction in amount of injected fuel to account for residual fuel of the previous cycle; or (b) earlier exhaust valve closing to trigger combustion of residual fuel within the trapping cycle, and a later injection and reduction of injected fuel to account for residual fuel of the previous cycle.

13. A non-transitory computer-readable storage medium storing a computer program having program codes which, when executed on a computer, performs a method for predicting and correcting an impending misfire in a homogeneous charge compression ignition (HCCI) engine, the method comprising:

modeling HCCI engine operation in a nominal, steady-state operating region and in unstable operating regions bordering the steady-state operating region, using a zero- dimensional model;
based on the modeling of the HCCI engine operation, predicting an occurrence of an engine misfire;
**characterized in that**
the modeling of HCCI engine operation includes thermodynamically modeling combustion, gas exchange, injection, and compression/expansion processes of chemical species in a combustion chamber of a cylinder of the HCCI engine at selected points in a combustion cycle of the HCCI engine;
if a value of IAR at a crank angle $\theta$ corresponding to exhaust valve opening is greater than or equal to a threshold value $K_{th}$, then complete combustion is determined to have occurred in the cylinder, and if a value of IAR at a crank angle $\theta$ corresponding to exhaust valve opening is less than threshold value $K_{th}$, then a misfire is determined to have occurred in the cylinder; and
IAR corresponds to a rate at which a reaction of the chemical species in the cylinder has proceeded up to a crank angle $\theta$ ; and
wherein the method further comprises, in the case an engine misfire is predicted, providing a remedial corrective measure.

**Patentansprüche**

1. Verfahren zur Vorausbestimmung und Korrektur eines bevorstehenden Verbrennungsaussetzers in einem homogenen Kompressionszündungsmotor (HCCI), das folgendes umfasst:

Modellierung des HCCI-Motorbetriebs in einem nominellen, stationären Betriebsbereich und in instationären Betriebsbereichen, die an den stationären Betriebsbereich angrenzen, mithilfe eines nulldimensionalen Modells;
basierend auf der Modellierung des HCCI-Motorbetriebs, Vorausbestimmen eines Verbrennungsaussetzers;
**gekennzeichnet dadurch, dass**
die Modellierung des HCCI-Motorbetriebs die thermodynamische Modellierung der Verbrennung, den Ladungswechsel, die Einspritzung sowie Verdichtungs-/Expansionsprozesse chemischer Spezies in einem Brennraum eines Zylinders des HCCI-Motors in ausgewählten Stufen eines Verbrennungszyklus des HCCI-Motors umfasst;
wenn ein Wert der Integrierten Arrheniusrate (IAR) an einem Kurbelwinkel $\theta$, der dem Öffnen des Auslassventils entspricht, größer oder gleich einem Schwellenwert Kthist, so ist in dem Zylinder die vollständige Verbrennung erfolgt, und wenn ein Wert der IAR an einem Kurbelwinkel $\theta$, der dem Öffnen des Auslassventils entspricht, kleiner als ein Schwellenwert Kthist, so ist in dem Zylinder ein Verbrennungsaussetzer aufgetreten, wobei
die IAR einer Rate entspricht, bei der eine Reaktion der chemischen Spezies in dem Zylinder bis zu einem Kurbelwinkel $\theta$ fortgesetzt wird;
wobei das Verfahren für den Fall, dass ein Verbrennungsaussetzer vorausbestimmt worden ist, eine Korrekturmaßnahme aufweist.

2. Verfahren nach Anspruch 1, wobei die Modellierung des HCCI-Motorbetriebs die Durchführung eines Massenausgleichs chemischer Spezies umfasst, die in einem Brennraum eines Zylinders des HCCI-Motors in einer Vielzahl von Stufen eines Verbrennungszyklus des HCCI-Motors vorhanden sind.

3. Verfahren nach Anspruch 2, wobei die chemischen Spezies $C_aHb$, $O_2$, $N_2$, $CO_2$ und $H_20$ umfassen.

4. Verfahren nach Anspruch 3, wobei die Stufen des Verbrennungszyklus des HCCI-Motors folgendes umfassen:

a)Öffnen des Auslassventils;
b) Schließen des Auslassventils;
c) Einschlussphase vor der Verbrennung;

d) Einschlussphase nach der Verbrennung;
e) kurz vor der Einspritzung;
f) kurz nach der Einspritzung;
g) Nacheinspritzung/Voreinlass, vor der Verbrennung;
h) Nacheinspritzung/Voreinlass, nach der Verbrennung;
i) Öffnen des Einlassventils;
j) Schließen des Einlassventils;
k) vor der Verbrennung und
l) nach der Verbrennung.

5.  Verfahren nach Anspruch 4, wobei der Massenausgleich eine teilweise Verbrennung des Kraftstoffs während des Verbrennungszyklus berücksichtigt.

6.  Verfahren nach Anspruch 4, wobei der Massenausgleich gemäß den folgenden Beziehungen durchgeführt wird:

$$\phi C_a H_b + (a + b/4)O_2 \longrightarrow \phi\epsilon_c C_a H_b + (a + b/4)(1 - \phi(1 - \epsilon_c))O_2$$
$$+ a\phi(1 - \epsilon_c)CO_2 + (b/2)\phi(1 - \epsilon_c)H_2O \qquad (1)$$

$$N_r(k) = \beta(k)N_c(k-1) \qquad (2)$$

$$N_m(k) = N_r(k) + u(k) \qquad (3)$$

$$N_c(k) = P(\epsilon_c(k))N_m(k), \qquad (4)$$

k ist ein Verbrennungszyklus;
$\varphi(k) \in [0,1]$ ist ein Verhältnis der Kraftstoffmole zu einem stöchiometrischen Wert;
$\in (k) \in [0,1]$ ist eine Störgröße, welche die teilweise Verbrennung anzeigt, $\in (k) = 0$ zeigt die vollständige Verbrennung an;
$N_c(k-1)$ ist der Molvektor nach der Verbrennung in einem vorhergehenden Zyklus;
$N_r(k)$ ist der Molvektor, der die restlichen rezyklierten Mole der chemischen Spezies anzeigt, nachdem das Produkt aus dem Brennraum ausgestoßen wurde;
$\beta(k)$ ist eine Fraktion des rezyklierten Produkts;
u(k) ist ein Vektor, der zusätzlichen Kraftstoff von der Einspritzung und Luft vom Einlass anzeigt;
$N_m(k)$ ist der gemischte Molvektor vor der Verbrennung;
$N_c(k)$ ist der Molvektor nach der Verbrennung; und
P(k) ist eine Reaktionsmatrix, die sich aus der Beziehung (1) ergibt.

7.  Verfahren nach Anspruch 1, wobei die chemischen Spezies $C_a H_b$, $O_2$, $N_2$, $CO_2$ und $H_2O$ umfassen.

8.  Verfahren nach Anspruch 7, wobei die Stufen des Verbrennungszyklus des HCCI-Motors folgendes umfassen:

a) Öffnen des Auslassventils;
b) Schließen des Auslassventils;
c) Einschlussphase vor der Verbrennung;
d) Einschlussphase nach der Verbrennung;
e) kurz vor der Einspritzung;
f) kurz nach der Einspritzung;
g) Nacheinspritzung/Voreinlass, vor der Verbrennung;
h) Nacheinspritzung/Voreinlass, nach der Verbrennung;
i) Öffnen des Einlassventils;
j) Schließen des Einlassventils;
k) vor der Verbrennung und

l) nach der Verbrennung.

9. Verfahren nach Anspruch 8, wobei bei der thermodynamischen Modellierung der Verbrennung, des Ladungswechsels, der Einspritzung sowie der Verdichtungs-/Expansionsprozesse eine teilweise Verbrennung des Kraftstoffs während des Verbrennungszyklus berücksichtigt wird.

10. Verfahren nach Anspruch 8, wobei die Verbrennung, der Ladungswechsel, die Einspritzung sowie die Verdichtungs-/Expansionsprozesse der chemischen Spezies in dem Brennraum des Zylinders des HCCI-Motors anhand folgender Beziehungen thermodynamisch modelliert werden:

$$pV = 1^T NRT$$

$$C_p(T) - C_v(T) = 1^T R$$

$$H(T) = \Delta_f H + (T - T_{ref})C_p$$

$$IAR(\theta) \triangleq \int_{\theta_1}^{\theta} A \exp\left(-\frac{E_a}{RT(\theta)}\right) [C_a H_b]^{\sigma_1} [O_2]^{\sigma_2} d\theta + IAR(\theta_1), \qquad (7)$$

wobei p ein Druck im Zylinder ist;
V ist ein Volumen des Zylinders;
$1^T$ ist eine Matrix, die [1...1] entspricht;
N ist ein Molvektor, der die Mole der chemischen Spezies anzeigt;
R ist eine ideale Gaskonstante;
T ist eine Temperatur der chemischen Spezies im Zylinder;
$C_p$ (T) ist ein spezifischer Gleichdruck-Wärmevektor;
$C_v$ (T) ist ein spezifischer Gleichraum-Wärmevektor;
H(T) ist ein molarer Enthalpievektor;
$\Delta_f H$ ist ein molarer Bildungsenthalpievektor;
$T_{ref}$ ist eine Referenztemperatur, die einer Bildungswärme entspricht;
IAR ($\theta$) ist eine integrierte Arrheniusrate, die einer Rate entspricht, bei der eine Reaktion der chemischen Spezies in dem Zylinder bis zu einem Kurbelwinkel $\theta$ fortgesetzt wird;
A, $E_a$, $\sigma_1$ und $\sigma_2$ sind Parameter einer Verbrennungsreaktionsrate;
$[C_a H_b]$ ist eine Konzentration der Spezies $C_a H_b$ im Zylinder; und
$[O_2]$ ist eine Konzentration der Spezies $O_2$ im Zylinder.

11. Verfahren nach Anspruch 10,
wobei für den Fall, dass in dem Zylinder ein Verbrennungsaussetzer aufgetreten ist, eine der folgenden Maßnahmen durchgeführt wird: (a) späte Einspritzung zur Vermeidung der vollständigen Verbrennung während eines Einschlusszyklus und Reduzierung der Menge des eingespritzten Kraftstoffs unter Einberechnung des verbleibenden Kraftstoffs von dem vorhergehenden Zyklus; oder (b) frühes Schließen des Auslassventils zur Auslösung der Verbrennung des restlichen Kraftstoffs innerhalb des Einschlusszyklus sowie späte Einspritzung und Reduzierung des eingespritzten Kraftstoffs unter Einberechnung des Kraftstoffs von dem vorhergehenden Zyklus.

12. Verfahren nach Anspruch 1, wobei die Korrekturmaßnahme folgendes umfasst: (a) späte Einspritzung zur Vermeidung der vollständigen Verbrennung während eines Einschlusszyklus und Reduzierung der Menge des eingespritzten Kraftstoffs unter Einberechnung des von dem vorhergehenden Zyklus verbleibenden Kraftstoffs; oder (b) frühes Schließen des Auslassventils zur Auslösung der Verbrennung des verbleibenden Kraftstoffs innerhalb des Einschlusszyklus sowie späte Einspritzung und Reduzierung des eingespritzten Kraftstoffs unter Einberechnung des von dem vorhergehenden Zyklus verbleibenden Kraftstoffs.

13. Ein nicht-flüchtiges, computerlesbares Speichermedium, das ein Computerprogramm mit Programmcodes speichert, welches bei Ausführung auf einem Computer ein Verfahren zur Vorausbestimmung und Korrektur eines bevorstehenden Verbrennungsaussetzers in einem homogenen Kompressionszündungsmotor (HCCI) ausführt, wobei das Verfahren folgendes umfasst:

Modellierung des HCCI-Motorbetriebs in einem nominellen, stationären Betriebsbereich und in instationären Betriebsbereichen, die an den stationären Betriebsbereich angrenzen, mithilfe eines nulldimensionalen Modells; basierend auf der Modellierung des HCCI-Motorbetriebs, Vorausbestimmen eines Verbrennungsaussetzers; **gekennzeichnet dadurch, dass**

die Modellierung des HCCI-Motorbetriebs die thermodynamische Modellierung der Verbrennung, den Ladungswechsel, die Einspritzung sowie Verdichtungs-/Expansionsprozesse chemischer Spezies in einem Brennraum eines Zylinders des HCCI-Motors in ausgewählten Stufen eines Verbrennungszyklus des HCCI-Motors umfasst; wenn ein Wert der IAR an einem Kurbelwinkel $\theta$, der dem Öffnen des Auslassventils entspricht, größer oder gleich einem Schwellenwert Kthist, so ist in dem Zylinder die vollständige Verbrennung erfolgt, und wenn ein Wert der IAR an einem Kurbelwinkel $\theta$, der dem Öffnen des Auslassventils entspricht, kleiner als ein Schwellenwert Kthist, so ist in dem Zylinder ein Verbrennungsaussetzer aufgetreten; wobei

die IAR einer Rate entspricht, bei der eine Reaktion der chemischen Spezies in dem Zylinder bis zu einem Kurbelwinkel $\theta$ fortgesetzt wird;

wobei das Verfahren zudem eine Korrekturmaßnahme aufweist, für den Fall, das ein Verbrennungsaussetzer vorausbestimmt worden ist.

## Revendications

1. Procédé permettant de prévoir et de corriger un raté d'allumage dans un moteur HCCI comprenant des étapes consistant à :

   - modéliser le fonctionnement du moteur HCCI dans une plage de fonctionnement en régime permanent nominal et dans des plages de fonctionnement instable limitrophes de la plage de fonctionnement en régime permanent en utilisant un modèle à zéro dimension,
   - sur le fondement de la modélisation du fonctionnement du moteur HCCI prévoir l'arrivée d'un raté d'allumage,

   **caractérisé en ce que**
   la modélisation du fonctionnement du moteur HCCI comprend une modélisation thermodynamique des processus de combustion, d'échange de gaz, d'injection et de compression / détente des composés chimiques dans la chambre de combustion d'un cylindre du moteur HCCI en des points sélectionnés du cycle de combustion de ce moteur HCCI, si la valeur de la vitesse d'Arrhenius intégrée (IAR) au niveau d'un angle de manivelle $\underline{\theta}$ correspondant à l'ouverture de la soupape d'échappement est supérieure ou égale à une valeur de seuil $Kt_h$, on établit qu'une combustion complète s'est produite dans le cylindre, et si la valeur de l'IAR au niveau d'un angle de manivelle $\underline{\theta}$ correspondant à l'ouverture de la soupape d'échappement est inférieure à la valeur de seuil $Kt_h$, on établit qu'un raté d'allumage s'est produit dans le cylindre, et

   l'IAR correspond à la vitesse à laquelle la réaction des composés chimiques dans le cylindre s'est produite jusqu'à l'angle de manivelle $\underline{\theta}$, et

   le procédé comprenant en outre, dans le cas où un raté d'allumage est prévu, une étape consistant à effectuer une mesure correctrice de rattrapage.

2. Procédé conforme à la revendication 1,
   selon lequel l'étape consistant à modéliser le fonctionnement du moteur HCCI comprend une étape consistant à effectuer un équilibrage de masse des composés chimiques présents dans la chambre de combustion d'un cylindre du moteur HCCI au niveau d'un ensemble de points du cycle de combustion du moteur HCCI.

3. Procédé conforme à la revendication 2,
   selon lequel les composés chimiques comprennent $C_aH_b$, $O_2$, $N_2$, $CO_2$ et $H_2O$.

4. Procédé conforme à la revendication 3,
   selon lequel les points du cycle de combustion du moteur HCCI comprennent :

   a1) l'ouverture de la soupape d'échappement,
   b) la fermeture de la soupape d'échappement,

c) la phase de piégeage avant la combustion,
d) la phase de piégeage après la combustion,
e) avant l'instant d'injection
f) après l'instant d'injection
g) la post-injection/pré-admission, avant la combustion,
h) la post-injection/pré-admission, après la combustion,
i) l'ouverture de la soupape d'admission,
j) la fermeture de la soupape d'admission,
k) avant la combustion, et
l) après la combustion.

5. Procédé conforme à la revendication 4,
selon lequel l'équilibrage de masse prend en considération le brûlage partiel du carburant au cours du cycle de combustion.

6. Procédé conforme à la revendication 4,
selon lequel l'étape d'équilibrage de masse est mise en oeuvre conformément aux relations suivantes :

$$\phi C_a H_b + (a + b/4)O_2 \longrightarrow \phi\epsilon_c C_a H_b + (a + b/4)(1 - \phi(1 - \epsilon_c))O_2$$
$$+ a\phi(1 - \epsilon_c)CO_2 + (b/2)\phi(1 - \epsilon_c)H_2O \tag{1}$$

$$N_r(k) = \beta(k)N_c(k - 1) \tag{2}$$

$$N_m(k) = N_r(k) + u(k) \tag{3}$$

$$N_c(k) = P(\epsilon_c(k))N_m(k), \tag{4}$$

dans lesquelles k représente un cycle de combustion,

$\varphi(k)\in[0,1]$ représente le rapport des moles de carburant par rapport à la valeur stoechiométrique,
$\epsilon(k)\in[0,1]$ représente un facteur de perturbation indiquant un brûlage partiel, $\epsilon(k)=0$ indiquant une combustion complète,
$N_c(k-1)$ représente le vecteur molaire après la combustion dans un cycle précédent,
$N_r(k)$ représente le vecteur molaire indiquant les moles recyclées restantes des composés chimiques après que le produit ait été évacué de la chambre de combustion,
$\beta(k)$ représente la fraction des produits recyclés,
$u(k)$ représente un vecteur indiquant du carburant supplémentaire provenant de l'injection et de l'air provenant de l'admission,
$N_m(k)$ représente le vecteur molaire de précombustion mélangée,
$N_c(k)$ représente le vecteur molaire de postcombustion, et
$P(k)$ représente une matrice réactionnelle obtenue à partir de la relation (1).

7. Procédé conforme à la revendication 1,
selon lequel les composés chimiques comprennent $C_a H_b$, $O_2$, $N_2$, $CO_2$ et $H_2O$.

8. Procédé conforme à la revendication 7,
selon lequel les points du cycle de combustion du moteur HCCI comprennent :

a) l'ouverture de la soupape d'échappement,
b) la fermeture de la soupape d'échappement,
c) la phase de piégeage avant la combustion,
d) la phase de piégeage après la combustion,

e) avant l'instant d'injection,

f) après l'instant d'injection,

g) la post-injection / pré-admission avant la combustion,

h) la post-injection / pré-admission après la combustion,

i) l'ouverture de la soupape d'admission,

j) la fermeture de la soupape d'admission,

k) avant la combustion, et

l) après la combustion.

9. Procédé conforme à la revendication 8,
selon lequel la modélisation thermodynamique des processus de combustion, d'échange de gaz, d'injection et de compression / détente prend en considération un brûlage partiel du carburant au cours du cycle de combustion.

10. Procédé conforme à la revendication 8,
selon lequel les procédés de combustion, d'échange de gaz, d'injection et de compression / détente des composés chimiques dans la chambre de combustion du cylindre du moteur HCCI sont thermodynamiquement modélisés en utilisant les relations suivantes :

$$pV = 1^{T}NRT$$

$$C_{p}(T) - C_{v}(T) = 1^{T}R$$

$$H(T) = \Delta_{f}H + (T - T_{ref})C_{p}$$

$$IAR(\theta) \triangleq \int_{\theta_1}^{\theta} A \exp\left(-\frac{E_a}{RT(\theta)}\right)[C_aH_b]^{\sigma_1}[O_2]^{\sigma_2}d\theta + IAR(\theta_1), \qquad (7)$$

dans lesquelles :

p représente la pression dans le cylindre,

V représente le volume du cylindre,

$1^{T}$ représente une matrice correspondant à [1...1]

N représente un vecteur molaire indiquant les moles des espèces chimiques,

R représente la constante universelle des gaz parfaits,

T représente la température des composés chimiques dans le cylindre,

Cp(T) représente un vecteur de chaleur spécifique à pression constante,

$C_{v}(T)$ représente un vecteur de chaleur spécifique à volume constant,

H(T) représente un vecteur d'enthalpie molaire,

$\Delta_{f}H$ représente l'enthalpie molaire du vecteur de formation,

$T_{ref}$ représente la température de référence correspondant à la chaleur de formation,

IAR($\theta$) représente la vitesse d'Arrhenius intégrée correspondant à la vitesse à laquelle la réaction des composés chimiques dans le cylindre s'est produite jusqu'à l'angle de manivelle $\theta$,

A, $E_a$, $\sigma_1$ et $\sigma_2$ représentent des paramètres de la vitesse de la réaction de combustion,

[$C_aH_b$] représente la concentration des composés $C_aH_b$ dans le cylindre, et [$O_2$] représente la concentration du composé $O_2$ dans le cylindre.

11. Procédé conforme à la revendication 10,
selon lequel dans le cas où il a été établi qu'un raté d'allumage s'est produit dans le cylindre, on effectue l'une des étapes consistant à (a) retarder l'injection pour éviter une combustion complète au cours d'un cycle de piégeage et réduire la quantité de carburant injectée pour prendre en considération le carburant résiduel du cycle précédent, ou (b) fermer plus tôt la soupape d'échappement pour déclencher la combustion du carburant résiduel dans le cycle de piégeage et retarder l'injection et réduire le carburant injecté pour prendre en considération le carburant résiduel du cycle précédent.

12. Procédé conforme à la revendication 1,
selon lequel la mesure correctrice de rattrapage comprend l'une des étapes suivantes consistant à : (a) retarder l'injection pour éviter une combustion complète pendant un cycle de piégeage et réduire la quantité de carburant injectée pour prendre en considération le carburant résiduel du cycle précédent ou (b) avancer la fermeture de la soupape d'échappement pour déclencher la combustion du carburant résiduel pendant le cycle de piégeage et retarder l'injection et réduire le carburant injecté pour prendre en considération le carburant résiduel du cycle précédent.

13. Support de stockage lisible par ordinateur non transitoire permettant d'enregistrer un programme d'ordinateur comprenant des codes de programme qui, lorsqu'ils sont exécutés sur un ordinateur mettent en oeuvre un procédé permettant de prévoir et de corriger un raté d'allumage imminent dans un moteur HCCI, ce procédé comprenant des étapes consistant à :

- modéliser le fonctionnement du moteur HCCI dans une plage de fonctionnement en régime permanent nominal et dans des plages de fonctionnement instable limitrophe de la plage de fonctionnement en régime permanent en utilisant un modèle à zéro dimension,
- sur le fondement de la modélisation du fonctionnement du moteur HCCI prévoir l'arrivée d'un raté d'allumage du moteur,

**caractérisé en ce que**
l'étape de modélisation du fonctionnement du moteur HCCI comprend la modélisation thermodynamique des processus de combustion, d'échange de gaz, d'injection, et de compression / détente des composés chimiques dans la chambre de combustion d'un cylindre du moteur HCCI en des points sélectionnés du cycle de combustion de ce moteur HCCI,
si la valeur de l'IAR au niveau d'un angle de manivelle $\underline{\theta}$ correspondant à l'ouverture de la soupape d'échappement est supérieure ou égale à une valeur de seuil $K_{th}$, établir qu'une combustion complète s'est produite dans le cylindre, et si la valeur de l'IAR au niveau d'un angle de manivelle $\underline{\theta}$ correspondant à l'ouverture de la soupape d'échappement est inférieure à la valeur de seuil $K_{th}$, établir qu'un raté d'allumage s'est produit dans le cylindre, et l'IAR correspondant à la vitesse à laquelle la réaction des composés chimiques dans le cylindre s'est produite jusqu'à l'angle de manivelle $\underline{\theta}$, et
le procédé comprenant en outre une étape consistant à effectuer une mesure correctrice de rattrapage lorsqu'un raté d'allumage du moteur est prévu.

1. $T_{EVO}$, $N_{EVO}$, $IAR_{EVO}$

12. $T_C+$, $N_C+$, $IAR_C+$

2. $T_{EVC}$, $N_{EVC}$, $IAR_{EVC}$

11. $T_C-$, $N_C-$, $IAR_C-$

3. $T_{TP,c}-$, $N_{TP,c}-$, $IAR_{TP,c}-$

4. $T_{TP,c}+$, $N_{TP,c}+$, $IAR_{TP,c}+$

10. $T_{IVC}$, $N_{IVC}$, $IAR_{IVC}$

9. $T_{IVO}$, $N_{IVO}$, $IAR_{IVO}$

5. $T_{IOI}-$, $N_{IOI}-$, $IAR_{IOI}-$

6. $T_{IOI}+$, $N_{IOI}+$, $IAR_{IOI}+$

8. $T_{PI,c}+$, $N_{PI,c}+$, $IAR_{PI,c}+$

7. $T_{PI,c}-$, $N_{PI,c}-$, $IAR_{PI,c}-$

FIG.1

FIG.2

FIG.3

FIG.4

FIG.5

EP 2 547 890 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2002026921 A1

### Non-patent literature cited in the description

- **K. EPPING ; S. ACEVES ; R. BECHTOLD ; J. DEC.** The Potential of HCCI Combustion for High Efficiency and Low Emissions. *SAE paper 2002-01-1923,* 2002
- **R. KARRELMEYER ; J. HAVING ; W. FISCHER ; J. P. HATHOUT.** Closed-loop control of a 1- cylinder gasoline HCCI-Engine in Dynamic Operation. *E-COSM - Rencontres Scientifiques de l'IFP,* 2006
- Physically-Based Modeling and Control of Residual-Affected HCCI Engines using variable Valve Actuation. **G. M. SHAVER.** PhD thesis. Stanford University, 2005
- **J. BENGTSSON ; P. STRANDH ; R. JOHANSSON ; P. TUNESTAL ; B. JOHANSSON.** Model Predictive Control of Homogeneous Charge Compression Ignition (HCCI) Engine Dynamics. *IEEE International Conference on Control Applications,* 2006, 1675-1680
- **R. KARRELMEYER ; J. HARING ; W. FISCHER ; J. P. HATHOUT.** Closed-loop control of a 1-cylinder gasoline HCCI-Engine in Dynamic Operation. *E-COSM - Rencontres Scientifiques de l'IFP,* 2006
- Simulation of misfire and strategies for misfire of gasoline HCCI. **KNIERIM K.L. et al.** American Control Conference. IEEE, 11 June 2008, 3947-3952
- **K. L. KNIERIM ; SUNGBAE PARK ; J. AHMED ; A. KOJIC ; I. ORLANDINI ; A. KULZER.** Simulation of misfire and strategies for misfire recovery of gasoline HCCI. *Proceedings of the 2008 American Control Conference,* 2008, 3947-3952
- **G. M. SHAVER ; M. ROELLE ; J. C. GERDES.** A two-input two-output control model of HCCI engines. *American Control Conference, Proceedings of the 2006,* 2006
- **K. L. KNIERIM ; SUNGBAE PARK ; J. AHMED ; A. KOJIC ; I. ORLANDINI ; A. KULZER.** Simulation of misfire and strategies form is fire recovery of gasoline HCCI. *Proceedings of the 2008 American Control Conference,* 2008, 3947-3952